# EUROPEAN PATENT SPECIFICATION

(11) **EP 2 096 691 B1**
(45) Date of publication and mention of the grant of the patent: **08.02.2012**
(21) Application number: 08022199.7
(22) Date of filing: 19.12.2008
(51) Int. Cl.: H01M 4/38

(54) **Hydrogen storage alloy and alkaline storage battery employing hydrogen storage alloy as negative electrode active material**
Wasserstoffspeicherlegierung für eine Alkalinbatterie sowie ihre Verwendung als negatives Elektrodenaktivmaterial
Alliage à stockage d'hydrogène et batterie de stockage d'alcaline employant un alliage de stockage d'hydrogène en tant que matériau actif à électrode négative

(30) Priority: 27.12.2007 JP 2007336704; 22.09.2008 JP 2008242207
(43) Date of publication of application: 02.09.2009
(73) Proprietor: Sanyo Electric Co., Ltd., Osaka 570-8677 (JP)
(72) Inventor: Yoshida, Shuhei, Moriguchi-shi Osaka, 570-8677 (JP); Tamura, Kazuaki, Moriguchi-shi Osaka, 570-8677 (JP); Katayama, Yoshinobu, Moriguchi-shi Osaka, 570-8677 (JP); Nagae, Teruhito, Moriguchi-shi Osaka, 570-8677 (JP)
(74) Representative: Glawe, Delfs, Moll

(56) References cited:
- EP-A- 2 031 676
- JP-A- 2002 164 045

## Description

### TECHNICAL FIELD

The present invention relates to a hydrogen storage alloy used as a negative electrode active material of an alkaline storage battery that is appropriate for a use requiring high current discharge, such as a hybrid electric vehicle (HEV) and pure electric vehicle (PEV), and an alkaline storage battery in which this hydrogen storage alloy is used as a negative electrode active material.

### BACKGROUND ART

In recent years, alkaline storage batteries, especially nickel-hydrogen storage batteries, have been used for a current source for equipment such as a hybrid electric vehicle (HEV) or pure electric vehicle (PEV) in which output is required. Component B (Ni), which is partially substituted by an element such as aluminum (Al) and manganese (Mn), of an AB₅ type rare earth hydrogen storage alloy such as LaNi₅ is generally used for a hydrogen storage alloy used as a negative electrode active material of a nickel-hydrogen storage battery. An AB₂ type structure is also known other than such AB₅ type rare earth hydrogen storage alloy. It is also known that various crystal structures are provided in combination of an AB₂ type structure with an AB₅ type structure.

Of these, a hydrogen storage alloy with an A₂B₇ type structure in which a phase of an AB₂ type structure and an AB₅ type structure is piled up has been examined in, for example, JP-A-2002-164045. This hydrogen storage alloy with an A₂B₇ type structure has a crystal structure of hexagonal structure (2H), enabling improvement of hydrogen absorption and desorption cycle characteristics. However, a hydrogen storage alloy with an A₂B₇ type structure has inadequate discharge characteristics (assist output) and, therefore, has a problem in that it does not have satisfactory performance for output use far beyond conventional level.

Now, an A₅B₁₉ type structure as well as an A₂B₇ type structure is known as a crystal structure that is a meta-stable structure. In this case, an A₅B₁₉ type structure is trilayer including an AB₂ type structure and an AB₅ type structure that enables the nickel (Ni) proportion per unit crystal lattice to be increased compared with an A₂B₇ type structure and, therefore, enables active points that accelerate adsorption and desorption of hydrogen molecule to be increased.

However, nickel (Ni) is known to be a smaller atomic radius than that of other elements (such as aluminum (Al), cobalt (Co), manganese (Mn), and zinc (Zn)) of component B in a hydrogen storage alloy with an A₅B₁₉ type structure. Therefore, an increased proportion of nickel (Ni) in an A₅B₁₉ type structure causes a problem of a smaller gap between metal atoms that constitute a unit lattice. Then, a smaller gap between metal atoms makes a hydrogen atom to have difficulty in entering into a metal lattice, leading to formation of unstable metal hydride and increase hydrogen equilibrium pressure.

Therefore, by using a nickel-hydrogen storage battery in which such hydrogen storage alloy with a narrowed gap between metal atoms is used as a negative electrode active material for high current charge/discharge, particle size reduction of a hydrogen storage alloy is accelerated, leading to lower durability. In addition, an increase in the hydrogen equilibrium pressure accelerates the hydrogen reduction reaction on the nickel positive electrode and self-discharge leading to deterioration of battery performance. As a result, this type of an alkaline storage battery has had an obstacle to being used as a power source of a hybrid electric vehicle (HEV), pure electric vehicle (PEV), or the like that requires output performance (very high output characteristics), durability (very high durability), and self discharge performance (very limited self discharge).

### SUMMARY

An advantage of some aspects of the invention is to provide an alloy structure of a hydrogen storage alloy, especially, a hydrogen storage alloy that can have output characteristics far beyond conventional level by specifying component A element, and an alkaline storage battery in which this hydrogen storage alloy is used as a negative electrode active material.

According to an aspect of the present invention, a hydrogen storage alloy includes component A including a rare earth element represented by Ln and magnesium and component B including elements containing at least nickel and aluminum, wherein a primary alloy phase of a hydrogen storage alloy represents an A₅B₁₉ type structure, wherein the proportion of the A₅B₁₉ type structure in the hydrogen storage alloy is not less than 80%; a general formula is represented as Ln₁-ₓMgₓNi_{y}-ₐ-_{b}AlₐM_{b} (wherein M represents at least one element selected from Co, Mn, and Zn; and 0.1≤x≤0.2, 3.6≤y≤3.9, 0.1≤a≤0.2, and 0≤b≤0.1); a rare earth element Ln includes maximally two elements containing at least La; and absorption hydrogen equilibrium pressure (Pa) is 0.03-0.17 MPa when the hydrogen amount absorbed in the hydrogen storage alloy (H/M (atomic ratio)) at 40°C is 0.5.

A rare earth element (Ln) that constitutes component A contributes to hydrogen absorption and desorption in a hydrogen storage alloy. In this case, an increased number of elements in a rare earth element (Ln) cause an increase in an interaction parameter in liquid phase during alloy casting, leading to generation of a second phase such as segregation. Then, an alkaline storage battery in which a hydrogen storage alloy in which a second phase such as segregation is generated is used as a negative electrode active material accelerates particle size reduction of a hydrogen storage alloy during repeated charge/discharge cycles. However, limiting the number of elements of a rare earth element (Ln) to a maximum of two elements including La; a larger atomic radius among rare earth elements (Ln) causes a reduction in interaction parameter in liquid phase during alloy casting. Therefore, generation of a second phase such as segregation can be easily suppressed, enabling suppression of particle size reduction of hydrogen storage alloy during charge/discharge cycle.

Such effects have been demonstrated to appear strikingly in an A₅B₁₉ type structure as a meta stable structure; therefore, a primary alloy phase represents an A₅B₁₉ type structure and 0.1 ≤ x ≤ 0.2, 0.1 ≤ a ≤ 0.2, 0 ≤ b ≤ 0.1, and 3.6 ≤ y ≤ 3.9 should be met in a general formula of Ln₁-ₓMgₓNi_{y}-ₐ-_{b}AlₐM_{b} (wherein M represents at least one element selected from Co, Mn, and Zn). This is because to make such A₅B₁₉ type structure as a meta -stable structure to be a primary alloy phase is not attained as long as stoichiometric ratio y falls within a previous range of about 3.5 in component B even if 0.1 ≤ x ≤ 0.2, 0.1 ≤ a ≤ 0.2, and 0 ≤ b ≤ 0.1 are met, and is attained only when a range of a stoichiometric ratio is 3.6 or more and 3.9 or less (a range of 3.6 ≤ y ≤ 3.9).

In this case, containing La with a larger atomic radius among that of rare earth elements (Ln) enables absorption hydrogen equilibrium pressure (Pa) to be 0.03-0.17 MPa when the hydrogen amount absorbed in the hydrogen storage alloy (HIM (atomic ratio)) at 40°C is 0.5, enabling self discharge performance to be improved. An equilibrium pressure of more than 0.17 MPa increases a hydrogen concentration on the surface of a hydrogen storage alloy, which contributes to reduction reaction of a positive electrode; therefore, significant reduction in capacity due to self discharge occurs in a use left for a long period of time under a high temperature environment such as a hybrid electric automobile and pure electric vehicle. On the other hand, absorption hydrogen equilibrium pressure (Pa) of less than 0.03 MPa reduces output characteristics due to a cell voltage drop.

Therefore, to show output characteristics and to keep durability and self discharge performance at the same time, a hydrogen storage alloy in which a primary alloy phase represents an A₅B₁₉ type structure, a general formula is represented as Ln₁₋ₓMgₓNi_{y-a-b}AlₐM_{b} (wherein M represents at least one element selected from Co, Mn, and Zn; and 0.1 ≤ x ≤ 0.2, 3.6 ≤ y ≤ 3.9, 0.1 ≤ a ≤ 0.2, and 0 ≤ b ≤ 0.1); a rare earth element Ln includes maximally two elements containing at least La; and absorption hydrogen equilibrium pressure (Pa) is 0.03-0.17 MPa when the hydrogen amount absorbed in the hydrogen storage alloy (H/M (atomic ratio)) at 40°C is 0.5.

A nickel molar ratio ((y - a - b)/(y + 1)) in a hydrogen storage alloy represented by the general formula is preferably 74% or more. Element M, which are nickel substituting elements in a hydrogen storage alloy represented by the general formula Ln₁₋ₓMgₓNi_{y-a-b}-AlₐM_{b}, does not preferably contain cobalt (Co) or manganese (Mn). Rare earth element (Ln) is preferably two elements: lanthanum (La) and samarium (Sm) or lanthanum (La) and neodymium (Nd). In addition, a hydrogen storage alloy with the above mentioned composition has adequate durability characteristics and powder including a hydrogen storage alloy with a particle size of median distribution (D50) of 20 µm or less to be made, leading to further high-output characteristics.

The invention can provide a hydrogen storage alloy with output characteristics (assist output) far beyond conventional level, because an alloy structure of a hydrogen storage alloy and an element of component A are specified, and an alkaline storage battery that shows output characteristics and keeps durability and self discharge performance at the same time by using this hydrogen storage alloy as a negative electrode active material.

### BRIEF DESCRIPTION OF THE DRAWINGS

The invention will be described with reference to the accompanying drawing, wherein like numbers reference like elements.

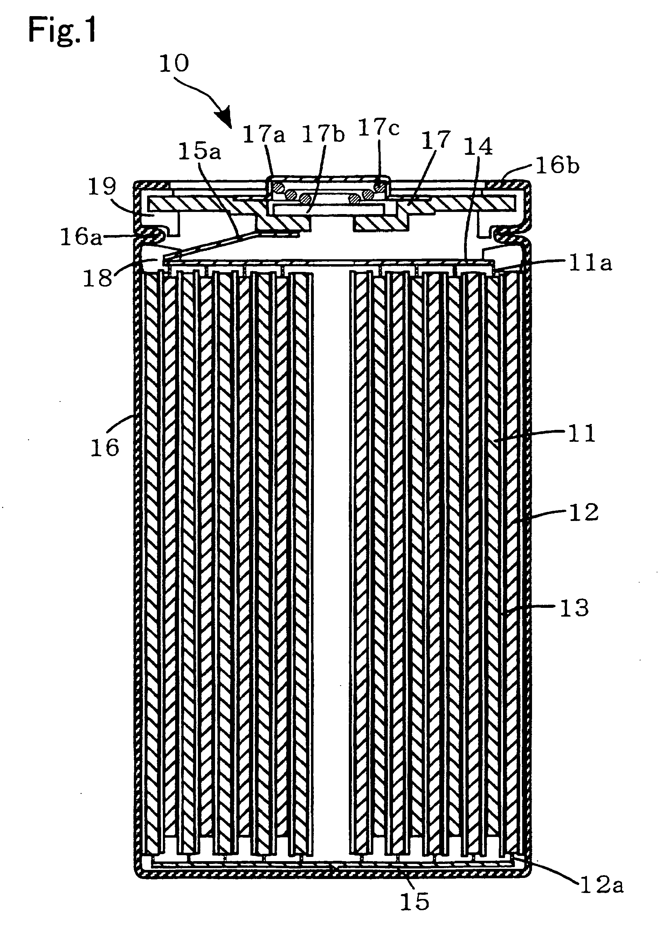

Fig. 1 is a cross sectional view schematically showing an alkaline storage battery of the present invention.

### DESCRIPTION OF EXEMPLARY EMBODIMENTS

Next, the embodiments of the invention are described as follows. Fig. 1 is a cross sectional view schematically showing an alkaline storage battery of the invention.

### 1. Hydrogen Storage Alloy

After mixing metal elements such as lanthanum (La), cerium (Ce), praseodymium (Pr), neodymium (Nd), samarium (Sm), magnesium(Mg), nickel (Ni), aluminum (Al), cobalt (Co), manganese (Mn), and zinc (Zn) to a molar ratio specified in Table 1 below, these mixtures are put into a high-frequency induction furnace under an argon gas atmosphere to melt. Then, the molten metals are rapidly cooled to form an alloy ingot with a thickness of 0.5 mm or thinner that is used for preparation of hydrogen storage alloys a to 1.

In this case, hydrogen storage alloy a is represented by a compositional formula of La_{0.8}Ce_{0.1}Pr_{0.05}Nd_{0.05}Ni_{4.2}M_{0.3} (Co, Mn)_{0.7}, hydrogen storage alloy b is represented as Nd_{0.9}Mg_{0.1}Ni_{3.2}Al_{0.2}Co_{0.1}, and hydrogen storage alloy c is represented as La_{0.3}Nd_{0.5}Mg_{0.2}Ni_{3.5}Al_{0.2}. Also, hydrogen storage alloy d is represented as Nd_{0.9}Mg_{0.1}Ni_{3.7}Al_{0.1}, hydrogen storage alloy e is represented as La_{0.2}Pr_{0.2}Nd_{0.5}Mg_{0.1}Ni_{3.7}Al_{0.1}, and hydrogen storage alloy f is represented as La_{0.2}Nd_{0.7}Mg_{0.1}Ni_{3.6}Al_{0.1}Zn_{0.1}. Also, hydrogen storage alloy g is represented as La_{0.2}Nd_{0.7}Mg_{0.1}Ni_{3.7}Al_{0.1}, hydrogen storage alloy h is represented as La_{0.4}Nd_{0.5}Mg_{0.1}Ni_{3.7}Al_{0.1}, and hydrogen storage alloy i is represented as La_{0.5}Sm_{0.4}Mg_{0.1}Ni_{3.7}Al_{0.1}. And also, hydrogen storage alloy j is represented as La_{0.4}Sm_{0.5}Mg_{0.1}Ni_{3.7}Al_{0.1}, hydrogen storage alloy k is represented as La_{0.8}Mg_{0.2}Ni_{3.8}Al_{0.1}, and hydrogen storage alloy 1 is represented as La_{0.6}Sm_{0.2}Mg_{0.2}Ni_{3.5}Al_{0.1}. The results above are summarized in to Table 1 below.

Table 1 below also shows values of x (stoichiometric ratio of Mg), a (stoichiometric ratio of Al), b (stoichiometric ratio of M), and y (stoichiometric ratio of component B (Ni + Al + M)) when each of hydrogen storage alloys a to 1 is represented by a general formula Ln₁-ₓMgₓN_{y}-ₐ-_{b}AlₐM_{b}(M represents elements including at least one of Co, Mn, and Zn). Also, nickel molar ratios ((y - a - b)/(y + 1)) are shown.

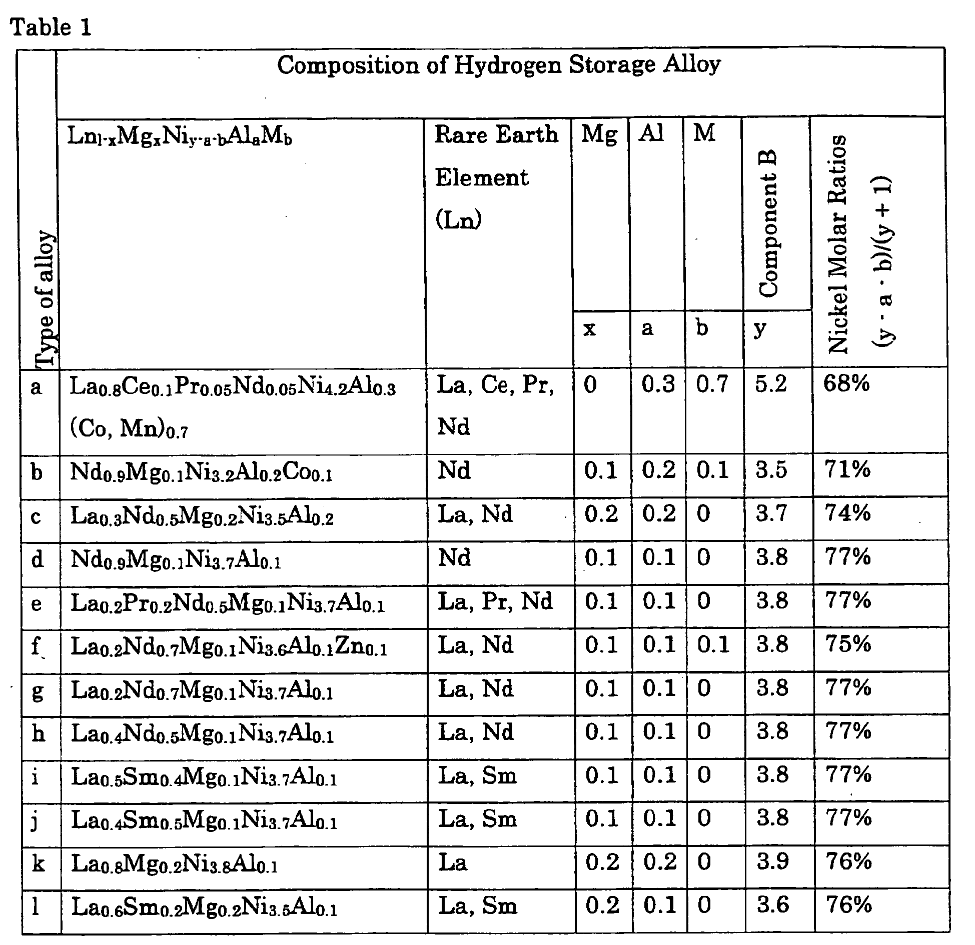

Next, a melting point (Tm) of each of obtained hydrogen storage alloys a to 1 was measured using a DSC (differential scanning calorimeter). Then, thermal treatment was conducted at a temperature lower by 30°C (Ta = Tm - 30°C) than melting point (Tm) of these hydrogen storage alloys a to 1 for a specified period of time (in this case, 10 hours). After thermal treatment, absorption hydrogen equilibrium pressure Pa (MPa) of each of hydrogen storage alloys a to 1 was obtained as shown in Table 2 below. In this case, a pressure when the hydrogen amount absorbed in the hydrogen storage alloy (H/M (atomic ratio)) at 40°C atmosphere is 0.5 as absorption hydrogen equilibrium pressure Pa (MPa) was measured in accordance with JIS H7201 (1991) "Method for measurement of pressure-composition-temperature (PCT) relations of hydrogen absorbing alloys."

Then, masses of hydrogen storage alloys a to 1 were ground roughly and then ground mechanically under an inert gas atmosphere to prepare hydrogen storage alloy powders a to 1 with a particle size of median distribution (D50) of 20 µm. Next, crystal structures of hydrogen storage alloy powders a to 1 was identified with an X-ray powder diffraction method using an X-ray diffractometer with a Cu-Ka as an X-ray source. In this case, a X-ray diffraction measurement was conducted under the conditions of a scanning speed of 1°/min, tube voltage of 40 kV, tube current of 300mA, scanning step of 1°, and measurement angle (2θ) of 20-50°. Based on obtained XRD profile, crystal structure of each of hydrogen storage alloys a to 1 was identified using a JCPDS card chart.

According to the compositional ratio of each crystal structure, Ce₅Co₁₉ type structure, Pr₅Co₁₉ type structure, and Sm₅Co₁₉ type structure are categorized into an A₅B₁₉ type structure; Nd₂Ni₇ type structure and Ce₂Ni₇ type structure are categorized into an A₂B₇ type structure; and LaNi₅ type structure is categorized into an AB₅ type structure, and compositional proportion of each structure was calculated by applying comparative strength ratio of a strength value of diffraction angle of each structure with a maximum strength value of 42-44°, based on the JCPDS, to obtained XRD profile to obtain the results as shown in Table 2 below.

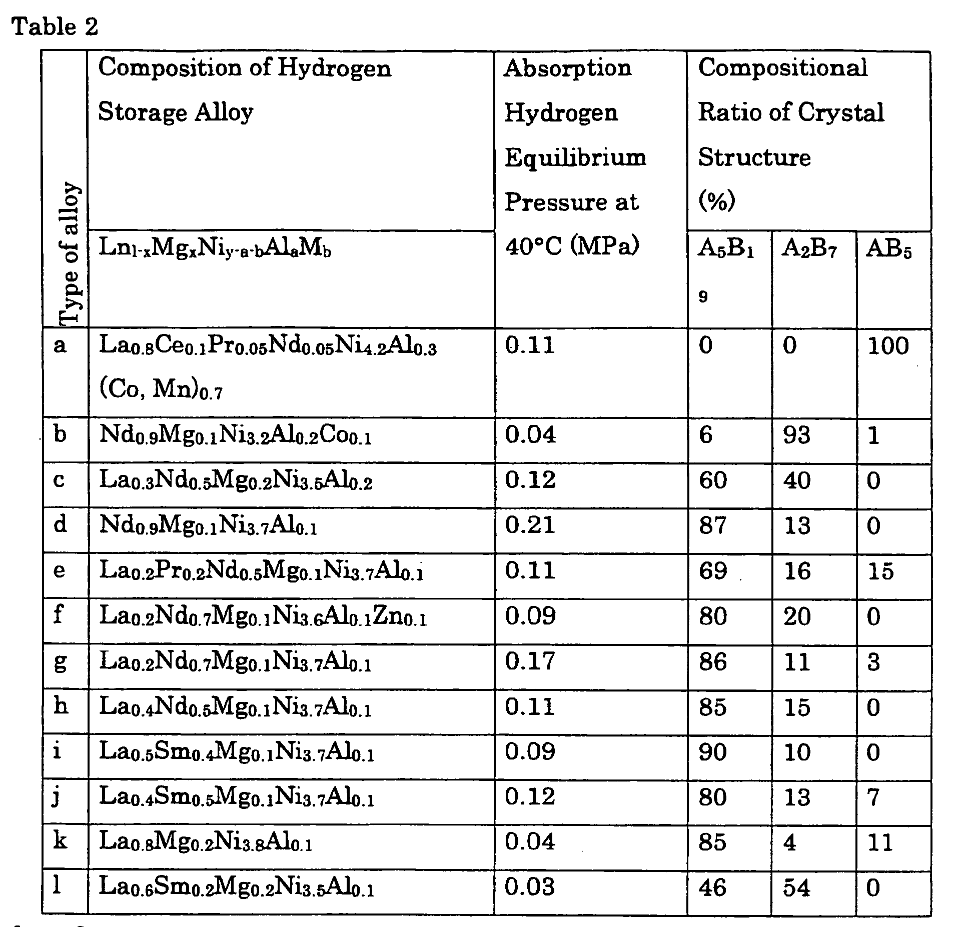

The results as shown in Table 1 and Table 2 above demonstrate the following: that is, alloy a that does not meet any condition of 0.1 ≤ x ≤ 0.2, 0.1 ≤ a ≤ 0.2, or 0 ≤ b ≤ 0.1 and has a stoichiometric ratio y of component B (Ni + Al + M) of as high as 5.2 has an AB₅ type structure. Also, alloy b that meets the conditions of 0.1 ≤ x ≤ 0.2, 0.1 ≤ a ≤ 0.2, and 0 ≤ b ≤ 0.1 and has a stoichiometric ratio y of component B (Ni + Al + M) of as low as 3.5 has an A₂B₇ type structure as a primary alloy phase.

On the other hand, alloys c to 1 that meets the conditions of 0.1 ≤ x ≤ 0.2, 0.1 ≤ a ≤ 0.2, and 0 ≤ b ≤ 0.1 and has a stoichiometric ratio y of component B (Ni + Al + M) of 3.6 or higher and 3.9 or lower has an A₅B₁₉ type structure as a primary alloy phase (in the case, of alloy 1, a compositional proportion of an A₅B₁₉ type structure of 46% can be considered as a primary alloy phase) with a nickel molar ratio ((y - a - b)/(y + 1)) of 74% or more, indicating that Ni proportion can be increased. Also, alloy e that includes 3 elements as a rare earth element (Ln) is shown to segregate an AB₅ type structure, even though a stoichiometric ratio y of component B (Ni + Al + M) is 3.6 or higher and 3.9 or lower.

### 2. Hydrogen Storage Alloy Electrode

Next, using the above-mentioned hydrogen storage alloys a to 1, a hydrogen storage alloy electrode 11 (a1 to 11) is prepared as follows. In this case, 0.5 mass% of nickel flake with an apparent density of 1.5 g/cm³ was initially added to water-soluble binder that was obtained by dissolving CMC (carboxymethylcellulose) into water (or pure water), whereto hydrogen storage alloy powder (a to 1) was respectively blended to be well mixed. Next, SBR (styrene butadiene latex) as a water insoluble binder and water (or pure water) were added and mixed to prepare hydrogen storage alloy slurry with adjusting viscosity to a slurry density of 3.1 g/cm³. In this case, CMC (carboxymethylcellulose) is adjusted to 0.1 mass% of 100 mass parts of hydrogen storage alloy powder, and SBR (styrene butadiene latex) is adjusted to 1.0 mass% of 100 mass parts of hydrogen storage alloy powder.

After that, a negative electrode substrate made of Ni-plated soft steel porous board (punched metal) is prepared, and hydrogen storage alloy slurry was applied, so that a packing density becomes 5.0 g/cm³, to this negative electrode substrate that is rolled to a specified thickness after drying. Then, it is cut into specified sizes (in this case, a surface area of a negative electrode (length of short axis × length of long axis × 2) of 800 cm²) to prepare hydrogen storage alloy electrode 11 (a1 to 11).

Now, hydrogen storage alloy electrode a1 is prepared using hydrogen storage alloy a, and hydrogen storage alloy electrode b1 is prepared using hydrogen storage alloy b. Also, hydrogen storage alloy electrode c1 is prepared using hydrogen storage alloy c, hydrogen storage alloy electrode d1 is prepared using hydrogen storage alloy d, hydrogen storage alloy electrode e1 is prepared using hydrogen storage alloy e, hydrogen storage alloy electrode f1 is prepared using hydrogen storage alloy f, hydrogen storage alloy electrode g1 is prepared using hydrogen storage alloy g, and hydrogen storage alloy electrode h1 is prepared using hydrogen storage alloy h. Also, hydrogen storage alloy electrode i1 is prepared using hydrogen storage alloy i, hydrogen storage alloy electrode j1 is prepared using hydrogen storage alloy j, hydrogen storage alloy electrode k1 is prepared using hydrogen storage alloy k, and hydrogen storage alloy electrode 11 is prepared using hydrogen storage alloy 1.

### 3. Nickel Electrode

On the other hand, a porous nickel sintered plate with a porosity of about 85% is immersed into a mixed aqueous solution of nickel nitrate and cobalt nitrate with a specific gravity of 1.75 to retain nickel salt and cobalt salt in a pore of a porous nickel sintered plate. Then, this porous nickel sintered plate is immersed in 25 mass% sodium hydroxide (NaOH) aqueous solution to convert nickel salt and cobalt salt into nickel hydroxide and cobalt hydroxide, respectively.

Next, after fully washing with water to remove alkaline solution out, active material containing nickel hydroxide as a principal component is filled in a pore of a porous nickel sintered plate after drying. Such active material filling procedure was repeated a specified number of times (for example, 6 times) to fill nickel hydroxide in a pore of a porous sintered board so that a packing density of active material as main part becomes 2.5 g/cm³. Then, it is cut into a specified size after being dried at room temperature to prepare nickel electrode 12.

### 4. Nickel-Hydrogen Storage Battery

After that, hydrogen storage alloy electrode 11 and nickel electrode 12 prepared as described above is winded around with separator 13 that is made of polypropylene nonwoven fabric intervening between them into a swirl to prepare a spiral electrode group. Substrate exposed part 11c of hydrogen storage alloy electrode 11 is exposed on the bottom of, and substrate exposed part 12c of nickel electrode 12 is exposed on the top of thus-prepared spiral electrode group. Next, negative electrode current collecting body 14 is welded to substrate exposed part 11c that is exposed on the bottom end surface of obtained spiral electrode group along with welding positive electrode current collecting body 15 on substrate exposed part 12c of nickel electrode 12 that is exposed on the top end surface of a spiral electrode group to make an electrode body.

Next, after obtained electrode body is housed in bottomed cylindrical outer can (outer surface of the bottom is the outer terminal of a negative electrode) 17 that is made of nickel-plated iron, negative electrode current collecting body 14 is welded to the inner bottom surface of outer can 17, while current collecting lead part 15a extending outward from positive electrode current collecting body 15 is welded to the bottom of sealing body 18 serving also as a positive electrode terminal around on the outer region of which is equipped with insulating gasket 19. Sealing body 18 is equipped with positive electrode cap 18a, and a pressure valve (not shown) including valve body 18b that is deformed under a specified pressure and spring 18c are placed within this positive electrode cap 18a.

Next, after annular groove part 17a is formed on the upper outer region of outer can 17, electrolyte is injected, and insulating gasket 19 that is equipped on the outer region of sealing body 18 is mounted on annular groove part 17a formed on the top of outer can 17. After that, nickel-hydrogen storage batteries 10 (A to L) is prepared by crimping opening end edge 17b of outer can 17. In this case, alkaline electrolyte including 30 mass% potassium hydroxide (KOH) aqueous solution is injected in outer can 17 to 2.5g (2.5 g/Ah) per battery capacity (Ah).

Now, battery A is a battery in which hydrogen storage alloy electrode a1 is used, battery B is a battery in which hydrogen storage alloy electrode b1 is used, battery C is a battery in which hydrogen storage alloy electrode c1 is used, battery D is a battery in which hydrogen storage alloy electrode d1 is used, battery E is a battery in which hydrogen storage alloy electrode e1 is used, battery F is a battery in which hydrogen storage alloy electrode f1 is used, battery G is a battery in which hydrogen storage alloy electrode g1 is used, battery H is a battery in which hydrogen storage alloy electrode h1 is used, battery I is a battery in which hydrogen storage alloy electrode i1 is used, battery J is a battery in which hydrogen storage alloy electrode j1 is used, battery K is a battery in which hydrogen storage alloy electrode k1 is used, and battery L is a battery in which hydrogen storage alloy electrode l1 is used.

### 5. Battery Tests

### (1) Evaluation of Output Characteristics

First, batteries A to L prepared as described above were charged to 120% of state of charge (SOC) at a temperature atmosphere of 25°C and a charging current of 1It followed by a 1-hour pause. Next, after leaving as it was at a temperature atmosphere of 70°C for 24 hours, discharge was conducted at a temperature atmosphere of 45°C and a discharging current of 1It to a battery voltage of 0.3V: this cycle was repeated twice to activate batteries A to L.

After the end of activation, at a temperature atmosphere of 25°C, charging was conducted at a charging current of 1It to 50% of state of charge (SOC) followed by a 1-hour pause. Next, after charging was conducted for 20 seconds at a temperature atmosphere of -10°C and an arbitrary charge rate followed by a 30-minute pause. After that, discharging was conducted at a temperature atmosphere of -10°C and an arbitrary discharge rate for 10 seconds followed by a 30-minute pause at a temperature atmosphere of 25°C. Such a cycle including charging at a temperature atmosphere of -10°C and an arbitrary charge rate for 20 seconds, 30-minute pause, discharge at an arbitrary discharge rate for 10 seconds, and 30-minute pause at a temperature atmosphere of 25°C was repeated.

In this case, at an arbitrary charge rate, a charging current was increased in the order of 0.8 It → 1.7 It → 2.5 It → 3.3 It → 4.2 It, while, at an arbitrary discharge rate, a discharging current was increased in the order of 1.7 It → 3.3 It → 5.0 It → 6.7 It → 8.3 It, at each of which a battery voltage (V) of each of batteries A to L was measured at each discharge rate after 10 seconds from the start time of each rate to determine a discharge V-I plot fitted curve.

Now, a current when a battery voltage on the obtained V-I plot fitted curve was 0.9 V was determined in the form of a discharge output (-10°C assist output) as an index of discharge characteristics which was used for determining a relative ratio to a - 10°C assist output of battery B in which hydrogen storage alloy b was used as a reference (100) in the form of a -10°C assist output ratio (to battery B), providing the results shown in Table 3 below.

(2) Measuring of Amount of Particle Size Reduction (Amount of Change in Particle Size between Before and After Activation) of Hydrogen Storage Alloy Powder.
Next, an amount of particle size reduction (amount of change in a particle size between before and after activation (a particle size of median distribution (D50))) of hydrogen storage alloy powder was measured as an index of corrosion resistance of hydrogen storage alloy. An amount of particle size reduction was expressed as a difference in a particle size between immediately after grinding and after activation, and was an index of particle size reduction behavior of hydrogen storage alloy while charging/discharging during activation. In this case, a relative ratio to an amount of particle size reduction of battery B in which hydrogen storage alloy b was used as a reference (100) was determined as an amount of particle size reduction ratio (to battery B), providing the results shown in Table 3 below.

Next, based on obtained -10°C assist output and an amount of particle size reduction of hydrogen storage alloy powder, -10°C assist output ratio to an amount of particle size reduction was determined as an output-durability index (output-durability index = -10°C assist output /amount of particle size reduction), providing the results shown in Table 3 below.

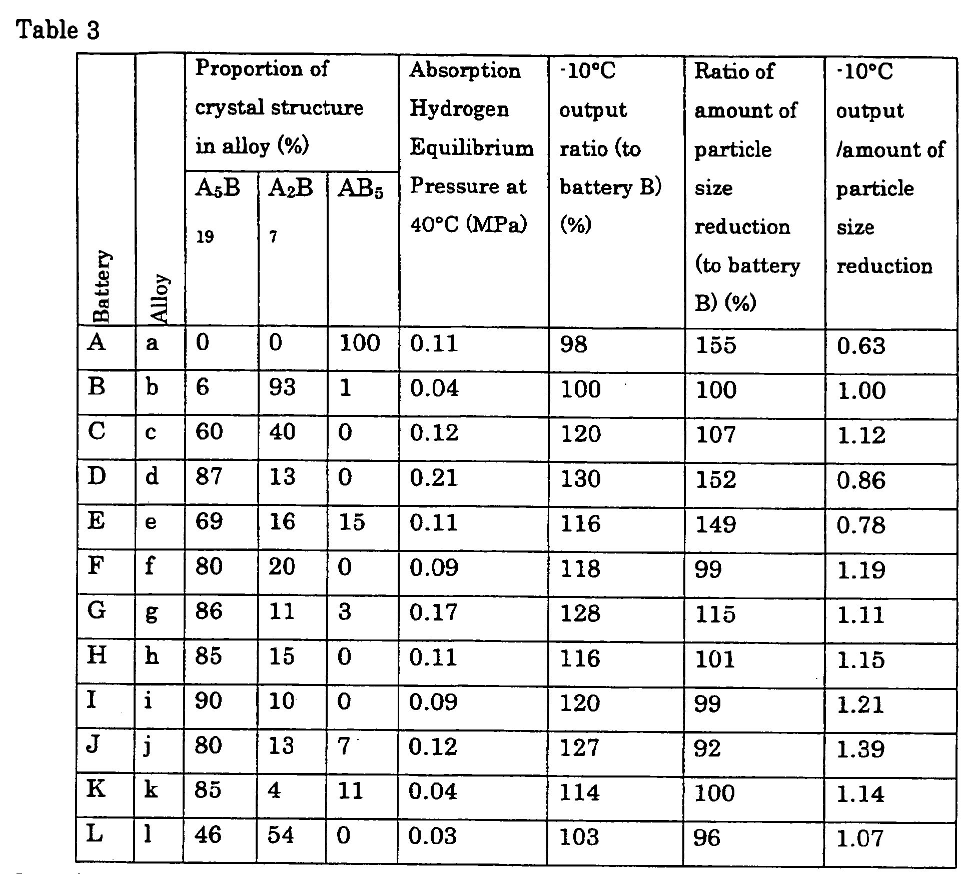

The results as shown in Table 3 above demonstrate the following: that is, compared with battery B in which hydrogen storage alloy b was used, batteries C to L in which hydrogen storage alloys c to 1 was used that, in other words, meets the conditions of 0.1 ≤ x ≤ 0.2, 0.1 ≤ a ≤ 0.2, and 0 ≤ b ≤ 0.1 and has a larger stoichiometric ratio y of component B (Ni + Al + M) tends to show a larger -10°C assist output (low temperature output) and improved assist output as well as improved -10°C assist output ratio to an amount of particle size reduction.

However, such as battery D that meets the conditions of 0.1 ≤ x ≤ 0.2, 0.1 ≤ a ≤ 0.2, and 0 ≤ b ≤ 0.1 and has a large stoichiometric ratio y of component B (Ni + Al + M), use of hydrogen storage alloy d in which rare earth element (Ln) includes only neodymium (Nd) but not lanthanum (La) showed to cause a larger hydrogen equilibrium pressure (Pa), a larger amount of particle size reduction, and a reduced -10°C assist output ratio to an amount of particle size reduction. This might be because using neodymium (Nd) with a smaller atomic radius than that of lanthanum (La) as rare earth element (Ln) causes a smaller gap between metal atoms make hydrogen atom to have difficulty in entering into a metal lattice, leading to formation of unstable metal hydride and increase hydrogen equilibrium pressure. Then, by using such hydrogen storage alloy with a narrowed gap between metal atoms as negative electrode active material for high current charge/discharge, particle size reduction of hydrogen storage alloy might be accelerated, leading to leading to lower durability.

Such as battery E that meets the conditions of 0.1 ≤ x ≤ 0.2, 0.1 ≤ a ≤ 0.2, and 0 ≤ b ≤ 0.1 and has a large stoichiometric ratio y of component B (Ni + Al + M), including three elements of lanthanum (La), praseodymium (Pr), and neodymium (Nd) in rare earth element (Ln) was shown to cause a larger amount of particle size reduction and a further reduced -10°C assist output ratio to an amount of particle size reduction. This was because an increased number of elements of rare earth element (Ln) constituting component A cause an increase in interaction parameter in liquid phase among constitutive elements during alloy casting, leading to a second phase such as segregation to easily be generated. And then, generation of a second phase such as segregation accelerates particle size reduction, leading to a larger amount of particle size reduction.

Taking the results shown in Table 1 to Table 3 above into consideration comprehensively provides the following: that is, a primary alloy phase of a hydrogen storage alloy comprising component A including a rare earth element represented by Ln and magnesium and component B including elements containing at least nickel and aluminum represents an A₅B₁₉ type structure as a primary structure; when a general formula was represented as Ln₁₋ₓMgₓNi_{y-a-b}AlₐM_{b} (M represents at least one element selected from Co, Mn, and Zn), use of a hydrogen storage alloy that meets the conditions of 0.1 ≤ x ≤ 0.2, 0.1 ≤ a ≤ 0.2, 0 ≤ b ≤ 0.1, and 3.6 ≤ y ≤ 3.9 and includes rare earth element (Ln) containing maximally two elements including at least lanthanum (La) causes an increase in Ni proportion with a nickel molar ratio ((y - a - b)/(y + 1)) of 74% or more; absorption hydrogen equilibrium pressure (Pa) was 0.03-0.17 MPa when the hydrogen amount absorbed in the hydrogen storage alloy (H/M (atomic ratio)) at 40°C was 0.5, leading to a larger -10°C assist output (low temperature output) and an improved -10°C assist output ratio to an amount of particle size reduction.

In the above described embodiment, example of samarium (Sm) or neodymium (Nd) used as rare earth element (Ln) other than lanthanum (La) was described, but lanthanoid such as praseodymium (Pr) and cerium (Ce) can be used other than samarium (Sm) and neodymium (Nd). Element M, which is a nickel substituting element in a hydrogen storage alloy represented by the general formula Ln₁₋ₓMgₓNi_{y-a-b}AlₐM_{b}, does not preferably contain cobalt (Co) or manganese (Mn). This was because self discharge performance (very limited self discharge) was required for a use left for a long period of time under a high temperature environment such as a hybrid electric automobile and pure electric vehicle, while including cobalt (Co) and manganese (Mn) in a negative electrode causes elution of these elements during a prolonged storage, leading to redeposition on a separator that causes a reduction in self discharge performance.

## Claims

1. A hydrogen storage alloy comprising:
component A including rare earth element represented by Ln and magnesium; and
component B including elements containing at least nickel and aluminum;
a primary alloy phase of the hydrogen storage alloy representing an A₅B₁₉ type structure, wherein the proportion of the A₂B₁₉ type structure in the hydrogen storage alloy is not less than 80 %;
a general formula being represented as Ln₁₋ₓMgₓNi_{y-a-b}AlₐM_{b} (wherein M represents at least one element selected from Co, Mn, and Zn; and 0.1 ≤ x≤0.2, 3.6≤y≤3.9, 0.1≤a≤0.2, and 0≤b≤0.1);
the rare earth element (Ln) including maximally two elements containing at least lanthanum (La); and
absorption hydrogen equilibrium pressure (Pa) being 0.03-0.17 MPa when a hydrogen amount absorbed in the hydrogen storage alloy (H/M (atomic ratio)) at 40°C is 0.5.

2. The hydrogen storage alloy according to claim 1, further comprising:
a nickel molar ratio ((y - a - b)/(y + 1)) of the hydrogen storage alloy represented by the general formula Ln₁₋ₓMgₓNi_{y-a-b}AlₐM_{b} of 74% or more.

3. The hydrogen storage alloy according to claim 1 or 2, further comprising:
element M, or a nickel substituting element, of the hydrogen storage alloy represented by the general formula Ln₁₋ₓMgₓNi_{y-a-b}AlₐM_{b} including no cobalt (Co) or manganese (Mn).

4. The hydrogen storage alloy according to any one of claims 1 to 3, wherein the rare earth element (Ln) includes two elements of lanthanum (La) and samarium (Sm) or two elements of lanthanum (La) and neodymium (Nd).

5. The hydrogen storage alloy according to any one of claims 1 to 4, wherein powder of the hydrogen storage alloy has a particle size of median distribution (D50) of 20 µm or less.

6. An alkaline storage battery comprising:
a hydrogen storage alloy electrode in which the hydrogen storage alloy according to any one of claims 1 to 5 is used as a negative electrode active material
a positive electrode;
a separator separating both of these electrodes; and
an alkaline electrolyte equipped in an outer can.

## Patentansprüche

1. Wasserstoffspeicherlegierung, die Folgendes umfasst:
Komponente A, die ein Seltenerdelement, das durch Ln dargestellt ist, und Magnesium einschließt; und
Komponente B, die Elemente einschließt, die mindestens Nickel und Aluminium enthalten;
eine primäre Legierungsphase der Wasserstoffspeicherlegierung, die eine A₅B₁₉-Typ-Struktur darstellt, wobei der Anteil der A₅B₁₉-Typ-Struktur in der Wasserstoffspeicherlegierung nicht weniger als 80 % beträgt;
wobei eine allgemeine Formel als Ln₁₋ₓMgₓNi_{y-a-b}AlₐM_{b} dargestellt ist (wobei M mindestens ein Element ausgewählt aus Co, Mn und Zn darstellt; und 0,1 ≤ x ≤ 0,2, 3,6 ≤ y ≤ 3,9, 0,1 ≤ a ≤ 0,2 und 0 ≤ b ≤ 0,1);
das Seltenerdelement (Ln) maximal zwei Elemente einschließt, die mindestens Lanthan (La) umfassen; und
der Absorptionswasserstoffgleichgewichtsdruck (Pa) 0,03-0,17 MPa ist, wenn eine Wasserstoffmenge, die in der Wasserstoffspeicherlegierung absorbiert ist, (H/M (Atomverhältnis)) bei 40°C 0,5 beträgt.

2. Wasserstoffspeicherlegierung gemäß Anspruch 1, die weiter umfasst:
ein Nickelmolverhältnis ((y - a - b)/(y + 1)) der Wasserstoffspeicherlegierung, die durch die allgemeine Formel Ln₁₋ₓMgₓNi_{y-a-b}AlₐM_{b} dargestellt ist, von 74 % oder mehr.

3. Wasserstoffspeicherlegierung gemäß Anspruch 1 oder 2, die weiter umfasst:
Element M, oder ein Nickel substituierendes Element, der Wasserstoffspeicherlegierung, die durch die allgemeine Formel Ln₁₋ₓMgₓNi_{y-a-b}AlₐM_{b} dargestellt ist, das kein Kobalt (Co) oder Mangan (Mn) einschließt.

4. Wasserstoffspeicherlegierung gemäß einem der Ansprüche 1 bis 3, wobei das Seltenerdelement (Ln) zwei Elemente von Lanthan (La) und Samarium (Sm) oder zwei Elemente von Lanthan (La) und Neodym (Nd) einschließt.

5. Wasserstoffspeicherlegierung gemäß einem der Ansprüche 1 bis 4, wobei Pulver der Wasserstoffspeicherlegierung eine Teilchengröße der Medianverteilung (D50) von 20 µm oder weniger aufweist.

6. Alkalische Speicherbatterie, die folgendes umfasst:
eine Wasserstoffspeicherlegierungselektrode, in der die Wasserstoffspeicherlegierung gemäß einem der Ansprüche 1 bis 5 als negatives Elektrodenaktivmaterial verwendet wird;
eine positive Elektrode;
einen Separator, der diese beiden Elektroden trennt; und
einen alkalischen Elektrolyten, der in einem äußeren Behälter vorgesehen ist.

## Revendications

1. Alliage de stockage d'hydrogène comprenant :
un composant A comprenant un élément des terres rares représenté par Ln et du magnésium ; et
un composant B comprenant des éléments contenant au moins du nickel et de l'aluminium ;
une phase d'alliage primaire de l'alliage de stockage d'hydrogène représentant une structure de type A₅B₁₉, la proportion de la structure de type A₅B₁₉ dans l'alliage de stockage d'hydrogène n'étant pas inférieure à 80 % ;
une formule générale étant représentée par Ln₁₋ₓMgₓNl_{y-a-b}AlₐM_{b} (dans lequel M représente au moins un élément choisi parmi Co, Mn et Zn ; et 0,1 ≤ x ≤ 0,2, 3,6 ≤ y ≤ 3,9, 0,1 ≤ a ≤ 0,2 et 0 ≤ b ≤ 0,1) ;
l'élément des terres rares (Ln) comprenant au maximum deux éléments contenant au moins du lanthane (La) ; et
la pression d'équilibre de l'absorption d'hydrogène (Pa) étant de 0,03 - 0,17 MPa lorsqu'une quantité d'hydrogène absorbée dans l'alliage de stockage d'hydrogène (H/M (rapport atomique)) à 40° est de 0,5.

2. Alliage de stockage d'hydrogène selon la revendication 1, comprenant en outre :
un rapport molaire de nickel ((y - a - b)/(y + 1)) de l'alliage de stockage d'hydrogène représenté par la formule générale Ln₁₋ₓMgₓNi_{y-a-b}AlₐM_{b} de 74 % ou plus.

3. Alliage de stockage d'hydrogène selon la revendication 1 ou 2, comprenant en outre :
l'élément M, ou un élément se substituant au nickel, de l'alliage de stockage d'hydrogène représenté par la formule générale Ln₁₋ₓMgₓNi_{y-a-b}AlₐM_{b} ne contenant ni cobalt (Co), ni manganèse (Mn).

4. Alliage de stockage d'hydrogène selon l'une quelconque des revendications 1 à 3, dans lequel l'élément des terres rares (Ln) comprend deux éléments de lanthane (La) et de samarium (Sm) ou deux éléments de lanthane (La) et de néodyme (Nd).

5. Alliage de stockage d'hydrogène selon l'une quelconque des revendications 1 à 4, dans lequel la poudre de l'alliage de stockage d'hydrogène a une granulométrie moyenne (D50) de 20 µm ou moins.

6. Batterie de stockage alcaline comprenant :
une électrode en alliage de stockage d'hydrogène dans laquelle l'alliage de stockage d'hydrogène selon l'une quelconque des revendications 1 à 5 est utilisé comme matériau actif d'électrode négative ;
une électrode positive ;
un séparateur séparant ces deux électrodes ; et
un électrolyte alcalin disposé dans un bac externe.
